(19) Europäisches Patentamt
European Patent Office
Office européen des brevets

(11) **EP 3 279 808 B1**

(12) **EUROPEAN PATENT SPECIFICATION**

(45) Date of publication and mention of the grant of the patent:
**07.07.2021 Bulletin 2021/27**

(21) Application number: **16771290.0**

(22) Date of filing: **22.03.2016**

(51) Int Cl.:
*H04L 12/58* $^{(2006.01)}$          *G06T 11/60* $^{(2006.01)}$
*G06T 11/00* $^{(2006.01)}$

(86) International application number:
**PCT/CN2016/076949**

(87) International publication number:
**WO 2016/155535 (06.10.2016 Gazette 2016/40)**

(54) **PICTURE SYNTHESIS METHOD AND APPARATUS**

BILDSYNTHESEVERFAHREN UND -VORRICHTUNG

PROCÉDÉ ET APPAREIL DE SYNTHÈSE DE CLICHÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2015 CN 201510145112**

(43) Date of publication of application:
**07.02.2018 Bulletin 2018/06**

(73) Proprietor: **Advanced New Technologies Co., Ltd. George Town, Grand Cayman KY1-9008 (KY)**

(72) Inventors:
• **DU, Zhijun**
  **Hangzhou 310099 (CN)**
• **LI, Sanping**
  **Hangzhou 310099 (CN)**
• **WANG, Nan**
  **Hangzhou 310099 (CN)**
• **HE, Qiang**
  **Hangzhou 310099 (CN)**
• **ZHAO, Yanjun**
  **Hangzhou 310099 (CN)**

• **LAO, Zhenqiang**
  **Hangzhou 310099 (CN)**
• **SHI, Jie**
  **Hangzhou 310099 (CN)**
• **WANG, Weixing**
  **Hangzhou 310099 (CN)**

(74) Representative: **Fish & Richardson P.C. Highlight Business Towers Mies-van-der-Rohe-Straße 8 80807 München (DE)**

(56) References cited:
**EP-A1- 3 279 866       WO-A1-2014/203837
CN-A- 102 200 995      CN-A- 102 739 561
CN-A- 103 631 630      CN-A- 104 168 417
JP-A- 2010 066 972     US-A1- 2011 239 108**

• **MICHIAKI TATSUBORI ET AL: "HTML templates that fly", INTERNATIONAL WORLD WIDE WEB CONFERENCE 18TH, ACM, MADRID, ES, 20 April 2009 (2009-04-20), pages 951-960, XP058210927, DOI: 10.1145/1526709.1526837 ISBN: 978-1-60558-487-4**

**Description**

The present application claims the priority to Chinese Patent Application No. 201510145112.0, filed on March 30, 2015 and entitled "Picture synthesis method and apparatus".

**Technical field**

The present application relates to the technical field of Internet, and in particular to a picture synthesis method and apparatus.

**Background art**

Internet-based promotion activities are often in the form of diffusing pictures on web pages or social media platforms. In some activities, a number of different pictures need to be generated for numerous users within a short time. These pictures are usually generated by combining original materials. For example, with regard to original materials composed of a background image, a foreground image and foreground text, the foreground image and foreground text are drawn at designated positions of the background image, then the picture synthesis can be accomplished.

In the prior art, the application of a client/server structure usually uses two methods to synthesize a picture. The first one is that the server delivers, after combining original materials into a picture, the same to the client; and the second one is that the server sends the original materials and a guidance file indicating how to combine the original materials into a picture to the client, and the client combines the original materials and then generates a picture according to the guidance file.

In an application scenario where a large number of different pictures need to be generated within a short time, since combining original materials into a picture needs a certain processing time, the first method may result in an excessive pressure at the server end, which has a great challenge for the processing performance of the server and the number of servers; and since the total number of bytes of original materials required for synthesizing a picture is far more than the number of bytes of the picture, the second method may consume relatively high user traffic, which may further result in a too slow response speed for a user with a limited network bandwidth, and bring poor experience to the user.

US 2011/0239108 describes a method of optimizing delivering of web page content resources. The method includes referencing script source code to identify a web page content resource to be delivered to a web page client. A configuration file is referenced to determine that the identified resource should be combined with additional resources and sent as a single file to the web page client. The identified resource is combined with the additional resources into a single combined file. The single file is delivered to the web page client.

Michiaki Tatsubori et al. : "HTML templates that fly" (18th International World Wide Web Conference, ACM, Madrid, ES, 20, April 2009, pages 951-960, 978-1-60558-487-4) describes that web applications often use HTML templates to separate the webpage presentation from its underlying business logic and objects. The paper proposes a novel implementation for existing server-side template engines, FlyingTemplate, for (a) reduced bandwidth consumption in Web application servers, and (b) off-loading HTML generation tEisks to Web clients.

**Summary of the invention**

In view of this, the present application provides a picture synthesis method, applied to a server, the method comprising:

receiving a request for a picture from a user via a client; and

delivering a common image of the picture, original materials for generating a dedicated image of the picture and a configuration file to the client, for the client to generate the picture using the received original materials and common image according to the configuration file, the common image being generated by some of the original materials of the picture.

The present application further provides a picture synthesis apparatus, applied to a server, the apparatus comprising:

a request receiving unit, configured to receive a request for a picture from a user via a client; and

a material response unit, configured to deliver a common image of the picture, original materials for generating a dedicated image of the picture and a configuration file to the client, for the client to generate the picture using the received original materials and common image according to the configuration file, the common image being generated by some of the original materials of the picture.

It can be seen from the above technical solution that, by synthesizing a common image of a picture on a server and synthesizing a dedicated image of the picture on a client, the embodiments of the present application not only significantly reduce the load of the server, which can achieve high-concurrency picture synthesis under the condition of occupying a small number of server resources, but also limit the size of original materials needing to be transmitted to the client, which reduces the traffic consumption of the client.

**Brief description of the accompanying drawings**

Fig. 1 is two pictures used in a promotion activity in one example;

Fig. 2 is a flow chart of a picture synthesis method in an embodiment of the present application;

Fig. 3 is a common image of pictures in the example of Fig. 1;

Fig. 4 is a schematic diagram of the composition of a resource file package in the example of Fig. 1;

Fig. 5 is a schematic diagram of the processing procedure of a client and a server when a synthesized picture is generated in an application example of the present application;

Fig. 6 is an example diagram of a picture synthesized on a client in the example of Fig. 1;

Fig.7 is a hardware structure diagram of a server which applies an example of the present application; and

Fig. 8 is a logical structure diagram of a picture synthesis apparatus in an example of the present application.

**Detailed description**

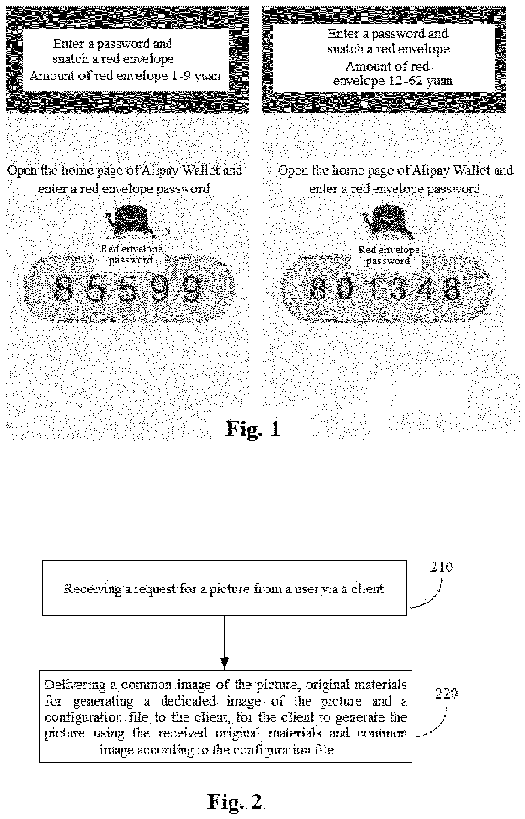

In promotion activities, a large number of different pictures needing to be generated within a short time usually have more common elements, for example, an identical background image, a corporation logo, an activity name, etc., while there are usually less differences among the pictures. For example, two password pictures used in an activity of entering a password and snatching a red envelope launched by AliPay are as shown in Fig. 1, where both the background picture element and prompt copywriting of the two pictures are the same, only the password and amount information are changed.

According to the above characteristics of the pictures, in the embodiments of the present application, a picture needing to be generated is divided into two parts: a common image which can be commonly used for a plurality of users and a dedicated image corresponding to a user, and a picture is formed by combining these two parts. The specific combination methods are various. For example, the dedicated image is displayed on the background of the common image, the dedicated image is connected to a certain boundary of the common image, etc. The common image may correspond to a service type, services of a certain type have at least one common image, and common images applied by different types of services are different. The common image may also correspond to a user type, users of a certain type have at least one common image, and common images applied by different types of users are different. The common image may also correspond to a service type and a user type; and the dedicated image may correspond to one or more users; this is not limited in the embodiments of the present application.

The embodiments of the present application propose a novel picture synthesis method, where a common image is generated at a server end, and the common image and some original materials for generating a dedicated image are synthesized into a picture at a client, which can both reduce the picture synthesis operation of the server and reduce the bandwidth required for delivering the original materials to the client, thereby solving the problem in the prior art. The method in this embodiment is applied to a server, and the procedure thereof is as shown in Fig. 2.

Step 211, receiving a request for a picture from a user via a client.

Step 220, delivering a common image of the picture, original materials for generating a dedicated image of the requested picture and a configuration file to the client which requests the picture, for the client to generate the requested picture using the received original materials and common image according to the configuration file.

the common image being generated by some of the original materials of the requested picture. With regard to a great number of pictures needing to be presented to users at the client, common parts are extracted therefrom, and these common parts are classified into a common image. It needs to be noted that the common image may be a common part applicable to all the users, and may also be a common part applicable to some users. The constitutional parts, except the common image, in the picture correspond to a dedicated image of a user.

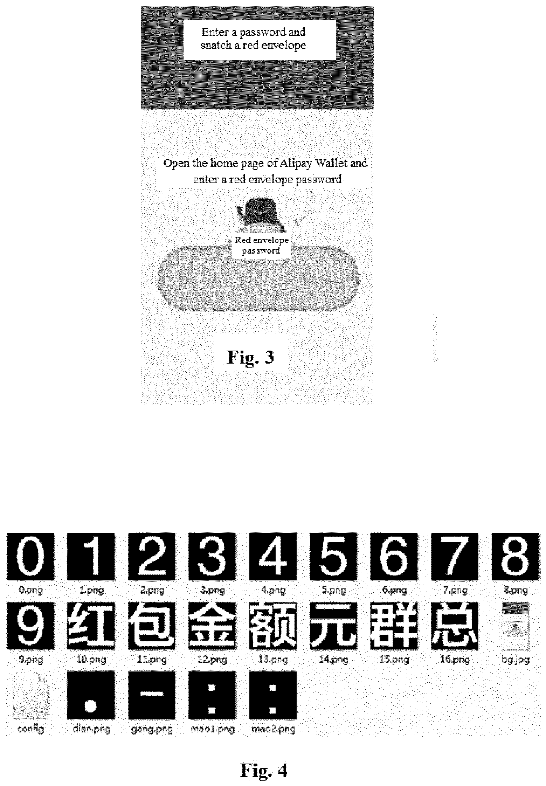

When the common image and the dedicated image are divided, the convenience degree of combining original materials when the picture is generated and the beautifulness degree of the generated picture may also be taken into consideration, so as to classify some picture elements which can be commonly used for a plurality of users into the dedicated image. Still taking the password pictures in Fig. 1 as an example, although the words "amount of red envelope" and "yuan" exist in both pictures, considering that changing the spacing of that line of words as the amount changes will be more neat and beautiful, the whole line of words can be classified as the dedicated image, and the corresponding common image is as shown in Fig. 3.

Some original materials for synthesizing the common image are chosen from all the original materials required for synthesizing the picture, and the server utilizes this part of original materials to generate the common image. Before receiving a request for a picture from a user via the client, the server may use some of the original materials of the picture to generate the common image in advance; and such a method is applicable to the situation where the common image is irrelevant to the specific contents requested by the user. Also, after receiving a request for a picture from a user via the client, the server may use some of the original materials of the picture to generate the common image according to the received request; and such a method is applicable to the situation where the common image may be different because of the specific contents requested by the user.

After receiving the request for a picture from the client, the server delivers the common image, the original materials required for generating the dedicated image of the requested picture and the configuration file to the client, wherein the configuration file comprises operation information required for synthesizing the common image and the delivered original materials into the picture, or, the configuration file is used for notifying the client of how to combine the common image and the other delivered original materials into the picture. For example, in the configuration file, a drawing method and drawing positions of the original materials and common image, and special processing to be performed on the original materials or common image, etc. may be described. For another example, the configuration file may comprise: drawing the original materials for generating the dedicated image on the common image, and the positions, sizes and/or rotation angles to draw the original materials, or comprise a calculation method for determining the drawing positions, sizes and/or rotation angles.

After receiving the above contents delivered by the server, the client may synthesize the common image and the received original materials into a picture according to the configuration file. From the perspective of the client, the common image is also one of the original materials for synthesizing the picture, and therefore the client may use a method for synthesizing a picture in the prior art to implement such process, and this will not be described. In addition, when drawing a picture, the client may synthesize the contents entered by the user via the client, a designated image, and/or other materials together into the picture; and the user may also customize how to synthesize the above materials with the common image and the received original materials into a picture.

According to different practical application scenarios, the server may use different methods to deliver the configuration file and the original materials for generating the dedicated image of the requested picture.

For example, for each user, the server may generate a configuration file to be used by the user and generate original materials required for generating a dedicated image of a picture for the user.

For another example, with regard to pictures having the same common image, the server may deliver all the original materials required for generating dedicated images of these pictures and configuration files corresponding to all the original materials to the client; that is to say, the server delivers the same common image, original materials and configuration files to different users. After receiving a request for a picture from a user via the client, the server generates text information corresponding to the user according to the request of the client, and delivers the generated text information to the client. The delivered text information indicates the original materials to be used to generate the dedicated image of the user, and the client uses the original materials corresponding to the text information and the common image according to the configuration file, and then the picture of the user can be generated. Since hardware resources occupied to process text information are far less than resources for image processing, such a method further alleviates the load of the server.

In some application scenarios, the common features of pictures of different types of services presented at the client are different. In these scenarios, the server may generate, according to a service type to which the picture is applied, a common image corresponding to the service type, and packages the common image corresponding to the service type, all the original materials required for generating a dedicated image of the picture applied to the service type and the configuration file into a resource file package corresponding to the service type. After receiving a request for a picture of the service type from the client, the server generates text information about the service type according to the received request, and delivers the generated text information and the resource file package corresponding to the service type to the client which requests the service type. In combination with the configuration file and the text information, the client synthesizes the common image and some of the original materials in the resource file package into a picture.

It can be seen that in the embodiments of the present application, the common image is generated at the server end, and the common image and some of the original materials are synthesized into a picture at the client, so that the server only needs to generate a small number of pictures to satisfy the requirements of all the users, which greatly reduces the load of the server; and the client also only needs to receive a small number of original materials to generate a picture, which reduces the traffic consumption of the client.

It needs to be noted that the server in this embodiment may be a logical or physical server, may also be two or more than two logical or physical servers, and these servers collaboratively accomplish various steps in the above method.

In one application example of the present application, the server side comprises two logical servers, a service server and a picture server, wherein the service server is used for receiving and responding to a service request of the client; and the picture server is used for generating and delivering a resource file package corresponding to the requested service type to the client.

On the picture server, with regard to a picture used by each service type, a common image and a dedicated image of the picture are divided, and the common image corresponding to the service type is generated in advance; and the picture server packages all the original materials required for generating a dedicated image of picture for a certain service type, a common image corresponding to the service type, and a configuration file referring to these original materials and the common image into a resource file package corresponding to the service type and stores same.

Taking the password picture of the service type of an AliPay red envelope as an example, the composition of the resource file package generated for the service type on the picture server is as shown in Fig. 4, wherein bg.jpg is the common image of all the user password pictures; config is the configuration file; and the other files are all the original materials required for generating the dedicated image of the password picture, and each Chinese character and symbol that may be used in the dedicated image is one original material of an image format.

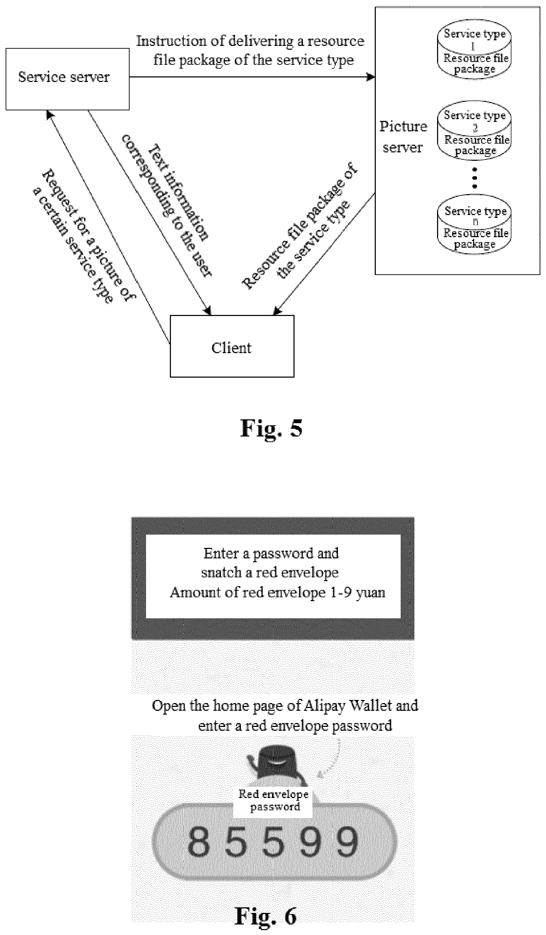

Fig. 5 shows a processing procedure of a client and a server when a synthesized picture is generated, where a user initiates a request for a picture for a certain service type to a service server via a client; after receiving the request sent from the client, the service server sends an instruction of delivering a resource file package to a picture server, the instruction comprising a service type of the resource file package and an address of the client for the delivery; and the service server generates, according to the request of the client, text information corresponding to the user and returns the same to the client. The picture server receives the instruction of the service server, and delivers the resource file package corresponding to the service type in the instruction to the client in the instruction. After receiving the text information from the service server, and the resource file package from the picture server, the client generates a complete picture and presents the same to the user.

In one example, assuming that a user requests a service server for a password picture of an AliPay red envelope via a client, the service server generates text information comprising "amount of red envelope 0-9 yuan", and "password = 85599" and delivers the same to the client. In a resource file package delivered from a picture server to the client, the config file comprises the following contents:

```
"width": 640,
  "height": 1135,
"fonts": {
"0": {
"path": "0.png" // the original material corresponding to the number "0" is 0.png
},
"red": {
"path": "10.png" // the original material corresponding to the Chinese character "red" is
10.png
},
},
"variables": {
"password": {
"type": "text",
"x": 110, // a start point coordinate x of the line "password"
"y": 740, // a start point coordinate y of the line "password"
"angle": 0, // an inclined angle of the character string of the line "password"
"length": 420, // the length of the character string "password"
"rotate": 0, // the maximum angle that a single character of the line "password" can
randomly rotate
"fontColor": "oxff59493f' // the color of the character string of the line "password"
```

},

The client finds the original material corresponding to each character, number or symbol in the configuration file according to "amount of red envelope 0-9 yuan" in the text information, and then draws the original materials according to designated positions and sizes in the configuration file on the common image. With regard to "password = 85599" in the text information, according to a designated position and drawing format for the password in the configuration file, "85599" is drawn on the common image. The picture synthesized on the client is as shown in Fig. 6.

In the configuration file, a calculation method for factors of positions, sizes and rotation angles, etc. for drawing the original materials can further be designated. For example, a character string comprising N characters is to be drawn on a straight line taking (x, y) as a start point, the length being length and the inclined angle (an included angle with the X axis) being angle, the central position of the original material image corresponding to the ith character can be designated in the configuration file as:

$$(x_i, y_i) = (x + (i * length/N) * \cos(angle), y + (i * length/N) * \sin(angle))$$

the size of the original material image when each character is drawn can be designated as:

$$(width, height) = (length/N, length/N)$$

and if we want each character to randomly rotate a certain angle, the rotation angle of the original material image when each character is drawn can be designated as:

$$angle + random(rotate) - rotate/2$$

wherein rotate is the maximum angle that the original material image of each character can randomly rotate based on the inclined angle of the straight line.

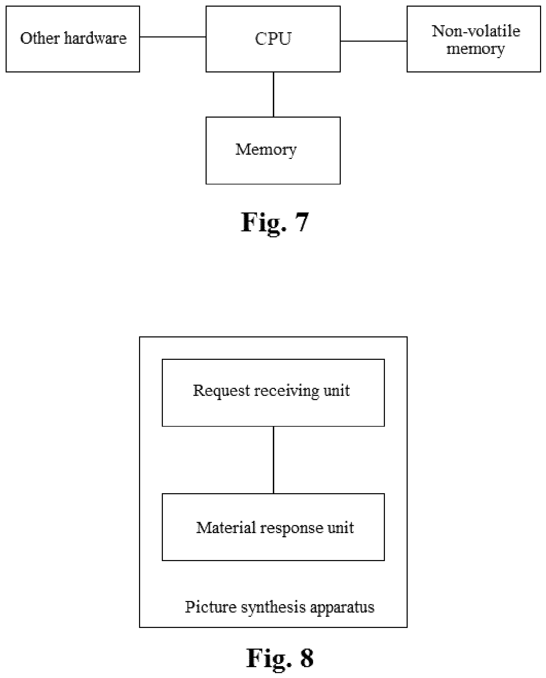

Corresponding to the above procedure, the examples of the present application further provide a picture synthesis apparatus. The apparatus may be implemented using software, and may also be implemented using hardware or a combination of software and hardware. Taking the software implementation as an example, as an apparatus in the logical sense, it is formed by a CPU (Central Process Unit) of a computing device where it is located to read a corresponding computer program instruction into a memory for running. From the hardware level, in addition to the CPU, memory and non-volatile memory shown in Fig. 7, the device where the apparatus for generating a synthesized picture is located generally further comprises other hardware such as a board card for implementing a network communication function, etc.

Fig. 8 shows a picture synthesis apparatus provided by the examples of the present application, applied to a server, and dividing the apparatus in terms of functions, the apparatus comprises a request receiving unit and a material response unit, wherein: the request receiving unit is configured to receive a request for a picture from a user via a client; and the material response unit is configured to deliver a common image of the picture, original materials for generating a dedicated image of the picture and a configuration file to the client, for the client to generate the picture using the received original materials and common image according to the configuration file, the common image being generated by some of the original materials of the picture.

Optionally, the apparatus further comprises: a text response unit, configured to generate, according to the request, text information corresponding to the user and deliver the same to the client, the text information being used for the client to generate the picture using original materials and a common image corresponding to the text information according to the configuration file.

Optionally, the common image comprises a common image generated, according to a service type to which the picture is applied, using some of the original materials and corresponding to the service type; the apparatus further comprises: a resource file package generation unit, configured to package the common image corresponding to the service type, all the original materials required for generating a dedicated image applied to the service type and the configuration file into a resource file package; and the material response unit is specifically configured to: deliver the resource file package to a client which requests the service type.

Optionally, the apparatus further comprises a first common image unit or a second common image unit, wherein: the first common image unit is configured to, before receiving a request for a picture from a user via a client, use some of the original materials of the picture to generate the common image in advance; and the second common image unit is configured to, after receiving a request for a picture from a user via a client, use some of the original materials of the picture to generate the common image according to the request.

Optionally, the configuration file comprises: positions, sizes and/or rotation angles for drawing the original materials for generating the dedicated image on the common image, or a calculation method for determining the positions, sizes and/or rotation angles.

The descriptions presented above are only preferred embodiments of the present application, and are not intended to limit the present application. Any modification, equivalent replacement, improvement, etc. within the principle of the present application shall all fall within the scope of protection of the present application.

In a typical configuration, a computing device includes one or more processors (CPUs), an input/output interface, a network interface and a memory.

The memory may include a non-permanent memory, a random access memory (RAM) and/or a non-volatile memory (such as a read-only memory (ROM) or flash memory (flash RAM)) and so on in computer-readable mediums. The memory is an example of the computer-readable mediums.

The computer-readable mediums comprise permanent and non-permanent, removable and non-removable media and may realize information storage with any method or technology. The information may be a computer-readable instruction, data structure, program module or other data.

The examples of computer storage media include but are not limited to a phase change memory (PRMA), static random access memory (SRAM), dynamic random access memory (DRAM), other types of random access memories (RAMs), read-only memory (ROM), electrically erasable programmable read-only memory (EEPROM), flash memory or other memory technologies, compact disk read-only memory (CD-ROM), digital versatile disc or other optical storage, magnetic cassette tape, magnetic tape and magnetic disk storage or other magnetic storage devices or any other non-transmission media, which can be used to store information that can be accessed by a computing device. According to the definition herein, the computer-readable mediums do not include transitory media, such as modulated data signals and carriers.

It also needs to be noted that the terms "including", "comprising" or any other variations thereof are intended to cover non-exhaustive inclusion, so that processes, methods, merchants or devices including a series of elements not only include those elements but also include other elements which are not listed expressly or include all inherent elements of such processes, methods, merchants or devices. If no more limitations are made, an element limited by "comprising a/an..." does not exclude other identical elements existing in the process, the method, the merchant, or the device which includes the element.

It should be understood by those skilled in the art that the embodiments of the present application may be provided as methods, systems or computer program products. Thus, the present application may adopt full hardware embodiments, full software embodiments, or embodiments which combine software and hardware. Moreover, the present application may use a form of a computer program product that is implemented on one or more computer-usable storage mediums (including but not limited to a disk memory, a CD-ROM, an optical memory, and the like) that include computer usable program codes.

**Claims**

1. A processing method, the method comprising:

   receiving (210), by a picture server and from a service server, an instruction to deliver a resource file package for generating a picture at a client, wherein the instruction is received after receiving a request for the picture from a user via the client at the service server, and wherein the requested picture is for a certain service type, wherein services of the certain service type have at least one common image, and wherein the service type is applied for generating the picture, and the instruction comprises the service type of a service of the resource file package and an address of the client for delivery;
   generating, on the picture server, a common image by using a first set of original materials, wherein the common image corresponds to the service type, and wherein the original materials are for generating a dedicated image of the requested picture;
   packaging, on the picture server, the common image corresponding to the service type, the original materials for generating the dedicated image applied to the service type and a configuration file into the resource file package;
   delivering (220), by the picture server to the client, the resource file package for the client to generate the picture by using the received original materials and the common image according to the configuration file, and for the client to present the picture to the user;
   receiving, by the client and from the service server, text information corresponding to the user and generated by the service server according to the request of the client, wherein the text information indicates original materials to be used to generate the dedicated image of the picture for the user, wherein the text information is used by the client to generate the dedicated image by using the original materials corresponding to the text information and the common image corresponding to the text information according to the configuration file, and wherein the text information comprises amount and password information;

finding, by the client, a second set of original materials from the original materials received for generating the dedicated image of the picture, wherein each of the second set of original materials is determined to correspond to each character, number or symbol in the configuration file according to the text information received from the service server, wherein the client draws the second set of original materials according to designated positions and sizes in the configuration file on the common image; and

generating, by the client, the requested picture using the text information, the received original materials, and the common image to generate the picture according to the configuration file.

2. The method according to claim 1, the method further comprising:

generating, according to the request and at the service server, the text information corresponding to the user, wherein the text information comprises amount and password information; and

delivering the text information, by the service server to the client.

3. The method according to claim 1, further comprising:

before receiving the request for the picture from the user via the client, using some of the original materials of the picture to generate the common image in advance; or

after receiving the request for the picture from the user via the client, using some of the original materials of the picture to generate the common image according to the request.

4. The method according to any one of claims 1 to 3, wherein the configuration file comprises: positions, sizes and/or rotation angles for drawing the original materials for generating the dedicated image on the common image, or a calculation method for determining the positions, sizes and/or rotation angles.

5. The method according to any one of claims 1 to 4, wherein the common image is used commonly for a plurality of users.

6. The method according to any one of claims 1 to 5, wherein the dedicated image corresponds to the user, and the dedicated image is displayed on the common image as background.

7. The method according to any one of claims 1 to 6, wherein the instruction comprises a service type of the resource file package and an address of the client for the delivery.

8. A picture synthesis apparatus, the apparatus implemented by using software and hardware, or a combination of software and hardware, wherein the apparatus is configured to perform the steps of any one of methods 1 to 7.

9. A computer-implemented system, wherein the system comprises:

a client device configured to:

receive a request for a picture for a certain service type, wherein the request is a user initiated request sent via the client device to a service server, wherein services of the certain service type have at least one common image as a common feature corresponding to the certain service type, and

after receiving text information from a service server and a resource file package from a picture server, generate a complete picture for presenting to the user, wherein the resource file package includes a common image corresponding to the service type, original materials for generating a dedicated image of the picture, and a configuration file, and wherein the picture is generated according to the configuration file by using the text information, the received original materials and the common image;

the service server configured to:

receive the request of the client device,

send an instruction for delivering the resource file package to the picture server, wherein the instruction comprises the service type of the service of the resource file package and an address of the client for the delivery,

generate, according to the request of the client device, the text information corresponding to the user, wherein the text information includes an amount and a password to be included in the picture generated at the client device for the user, and wherein the text information is used by the client to generate the dedicated image by using the original materials corresponding to the text information and the common image corresponding to the text information according to the configuration file, and
sending the generated text information to the client device; and

the picture server configured to:

receive the instruction sent from the service server,
generate a common image by using a first set of original materials, wherein the common image corresponds to the service type, and wherein the original materials are for generating a dedicated image of the requested picture,
packaging the common image corresponding to the service type, the original materials for generating the dedicated image applied to the service type and the configuration file into the resource file package, and deliver the resource file package for generating the picture at the client device using the received original materials and the common image according to the configuration file, wherein a second set of original materials is determined by the client from the original materials defined for generating the dedicated image of the picture, wherein each of the second set of original materials is determined to correspond to each character, number or symbol in the configuration file according to the text information received from the service server, wherein the client draws the second set of original materials according to designated positions and sizes in the configuration file on the common image.

10. The system according to claim 9, wherein the picture server is configured to:

before receiving the request for the picture from the user via the client, use some of the original materials of the picture to generate the common image in advance; or
after receiving the request for the picture from the user via a client, using some of the original materials of the picture to generate the common image according to the request.

11. The system according to any one of claims 9 to 10, wherein the configuration file comprises: positions, sizes and/or rotation angles for drawing the original materials for generating the dedicated image on the common image, or a calculation method for determining the positions, sizes and/or rotation angles.

12. The system according to any one of claims 9 to 11, wherein the common image is used commonly for a plurality of users, and wherein common images applied by different types of users are different.

**Patentansprüche**

1. Verarbeitungsverfahren, wobei das Verfahren umfasst:

Empfangen (210), durch einen Bildserver, und von einem Dienstserver, einer Anweisung zum Übermitteln eines Ressourcendateipakets zum Erzeugen eines Bildes auf einem Client, wobei die Anweisung empfangen wird, nachdem eine Anforderung für das Bild von einem Benutzer über den Client auf dem Dienstserver empfangen wurde, und wobei das angeforderte Bild für einen bestimmten Diensttyp steht, wobei Dienste des bestimmten Diensttyps mindestens eine gemeinsame Abbildung aufweisen, und wobei der Diensttyp zum Erzeugen des Bildes angewendet wird, und die Anweisung den Diensttyp eines Dienstes des Ressourcendateipakets und eine Adresse des Clients für eine Übermittlung umfasst;
Erzeugen, auf dem Bildserver, einer gemeinsamen Abbildung unter Verwendung eines ersten Satzes von Originalmaterialien, wobei die gemeinsame Abbildung dem Diensttyp entspricht und wobei die Originalmaterialien zum Erzeugen einer dedizierten Abbildung des angeforderten Bildes dienen;
Packen, auf dem Bildserver, der gemeinsamen Abbildung, die dem Diensttyp entspricht, der Originalmaterialien zum Erzeugen der dedizierten Abbildung, die auf den Diensttyp angewendet wird, und einer Konfigurationsdatei in das Ressourcendateipaket;
Übermitteln (220), durch den Bildserver, an den Client, des Ressourcendateipakets, damit der Client das Bild unter Verwendung der empfangenen Originalmaterialien und der gemeinsamen Abbildung gemäß der Konfigurationsdatei erzeugt, und der Client das Bild dem Nutzer präsentiert;

Empfangen, durch den Client, und von dem Dienstserver, von Textinformationen, die dem Benutzer entsprechen und durch den Dienstserver gemäß der Anforderung des Clients erzeugt wurden, wobei die Textinformationen Originalmaterialien angeben, die zum Erzeugen der dedizierten Abbildung des Bildes für den Benutzer verwendet werden sollen, wobei die Textinformationen von dem Client verwendet werden, um die dedizierte Abbildung unter Verwendung der Originalmaterialien, die den Textinformationen entsprechen, und der gemeinsamen Abbildung, die den Textinformationen entspricht, gemäß der Konfigurationsdatei zu erzeugen, und wobei die Textinformationen Mengen- und Passwortinformationen umfassen;

Auffinden, durch den Client, eines zweiten Satzes von Originalmaterialien aus den Originalmaterialien, die zum Erzeugen der dedizierten Abbildung des Bildes empfangen wurden, wobei bestimmt wird, dass jedes von dem zweiten Satz von Originalmaterialien jedem Zeichen, jeder Nummer oder jedem Symbol in der Konfigurationsdatei entspricht, gemäß den von dem Dienstserver empfangenen Textinformationen, wobei der Client den zweiten Satz von Originalmaterialien gemäß festgelegten Positionen und Größen in der Konfigurationsdatei auf der gemeinsamen Abbildung zeichnet; und

Erzeugen, durch den Client, des angeforderten Bildes unter Verwendung der Textinformationen, der empfangenen Originalmaterialien und der gemeinsamen Abbildung, um das Bild gemäß der Konfigurationsdatei zu erzeugen.

2. Verfahren nach Anspruch 1, wobei das Verfahren ferner umfasst:

Erzeugen, gemäß der Anforderung, und auf dem Dienstserver, der Textinformation, die dem Benutzer entsprechen, wobei die Textinformation Mengen- und Passwortinformationen umfassen; und
Übermitteln der Textinformationen durch den Dienstserver an den Client.

3. Verfahren nach Anspruch 1, ferner umfassend:

vor Empfang der Anforderung für das Bild von dem Benutzer über den Client, Verwenden einiger der Originalmaterialien des Bildes, um die gemeinsame Abbildung im Voraus zu erzeugen; oder
nach Empfang der Anforderung für das Bild von dem Benutzer über den Client, Verwenden einiger der Originalmaterialien des Bildes, um die gemeinsame Abbildung gemäß der Anforderung zu erzeugen.

4. Verfahren nach einem der Ansprüche 1 bis 3, wobei die Konfigurationsdatei umfasst: Positionen, Größen und/oder Drehwinkel zum Zeichnen der Originalmaterialien zum Erzeugen der dedizierten Abbildung auf der gemeinsamen Abbildung, oder ein Berechnungsverfahren zum Bestimmen der Positionen, Größen und/oder Drehwinkel.

5. Verfahren nach einem der Ansprüche 1 bis 4, wobei die gemeinsame Abbildung üblicherweise für mehrere Benutzer verwendet wird.

6. Verfahren nach einem der Ansprüche 1 bis 5, wobei die dedizierte Abbildung dem Benutzer entspricht und die dedizierte Abbildung auf der gemeinsamen Abbildung als Hintergrund angezeigt wird.

7. Verfahren nach einem der Ansprüche 1 bis 6, wobei die Anweisung einen Diensttyp des Ressourcendateipakets und eine Adresse des Clients für die Übermittlung umfasst.

8. Bildsynthesevorrichtung, wobei die Vorrichtung unter Verwendung von Software und Hardware, oder einer Kombination von Software und Hardware, implementiert wird, wobei die Vorrichtung dazu ausgelegt ist, die Schritte eines der Verfahren 1 bis 7 auszuführen.

9. Computerimplementiertes System, wobei das System umfasst:

eine Client-Vorrichtung, die ausgelegt ist zum:

Empfangen einer Anforderung für ein Bild für einen bestimmten Diensttyp, wobei die Anforderung eine von einem Benutzer initiierte Anforderung ist, die über das Client-Vorrichtung an einen Dienstserver gesendet wurde, wobei Dienste des bestimmten Diensttyps mindestens eine gemeinsame Abbildung als gemeinsames Merkmal, das dem bestimmten Diensttyp entspricht, aufweisen, und
nach Empfang von Textinformationen von einem Dienstserver und eines Ressourcendateipakets von einem Bildserver, Erzeugen eines vollständigen Bilds zur Präsentation für den Benutzer, wobei das Ressourcendateipaket eine gemeinsame Abbildung, das dem Diensttyp entspricht, Originalmaterialien zum Erzeugen einer dedizierten Abbildung des Bildes, und eine Konfigurationsdatei aufweist, wobei das Bild gemäß der Konfigurationsdatei unter Verwendung der Textinformationen, der empfangenen Originalmaterialien und der gemeinsamen Abbildung erzeugt wird;

wobei der Dienstserver ausgelegt ist zum:

Empfangen der Anforderung der Client-Vorrichtung,

Senden einer Anweisung zum Übermitteln des Ressourcendateipakets an den Bildserver, wobei die Anweisung den Diensttyp des Dienstes des Ressourcendateipakets und eine Adresse des Clients für die Übermittlung umfasst,

Erzeugen, gemäß der Anforderung der Client-Vorrichtung, der dem Benutzer entsprechenden Textinformationen, wobei die Textinformationen eine Menge und ein Passwort aufweisen, die in dem auf der Client-Vorrichtung für den Benutzer erzeugten Bild enthalten sein sollen, und wobei die Textinformationen von dem Client dazu verwendet werden, die dedizierte Abbildung unter Verwendung der Originalmaterialien, die den Textinformationen entsprechen, und der gemeinsamen Abbildung, die den Textinformationen entspricht, gemäß der Konfigurationsdatei zu erzeugen, und

Senden der erzeugten Textinformationen an die Client-Vorrichtung; und

der Bildserver ausgelegt ist zum:

Empfangen der von dem Dienstserver gesendeten Anweisung,

Erzeugen einer gemeinsamen Abbildung unter Verwendung eines ersten Satzes von Originalmaterialien, wobei die gemeinsame Abbildung dem Diensttyp entspricht, und wobei die Originalmaterialien zum Erzeugen einer dedizierten Abbildung des angeforderten Bildes dienen;

Packen der gemeinsamen Abbildung, die dem Diensttyp entspricht, der Originalmaterialien zum Erzeugen der dedizierten Abbildung, die auf den Diensttyp angewendet wird, und der Konfigurationsdatei in das Ressourcendateipaket, und

Übermitteln des Ressourcendateipakets zum Erzeugen des Bildes auf der Client-Vorrichtung unter Verwendung der empfangenen Originalmaterialien und der gemeinsamen Abbildung gemäß der Konfigurationsdatei, wobei ein zweiter Satz von Originalmaterialien durch den Client aus den zur Erzeugung der dedizierten Abbildung definierten Originalmaterialien des Bildes bestimmt wird, wobei bestimmt wird, dass jedes von dem zweiten Satz von Originalmaterialien jedem Zeichen, jeder Nummer oder jedem Symbol in der Konfigurationsdatei entspricht, gemäß den vom Dienstserver empfangenen Textinformationen, wobei der Client den zweiten Satz von Originalmaterialien gemäß festgelegten Positionen und Größen in der Konfigurationsdatei auf der gemeinsamen Abbildung zeichnet.

**10.** System nach Anspruch 9, wobei der Bildserver konfiguriert ist zum:

vor einem Empfang der Anforderung des Bildes von dem Benutzer über den Client, Verwenden einiger der Originalmaterialien des Bildes, um die gemeinsame Abbildung im Voraus zu erzeugen, oder

nach dem einem Empfang der Anforderung für das Bild von dem Benutzer über einen Client, Verwenden einiger der Originalmaterialien des Bildes, um die gemeinsame Abbildung gemäß der Anforderung zu erzeugen.

**11.** System nach einem der Ansprüche 9 bis 10, wobei die Konfigurationsdatei umfasst: Positionen, Größen und/oder Drehwinkel zum Zeichnen der Originalmaterialien zum Erzeugen der dedizierten Abbildung auf der gemeinsamen Abbildung, oder ein Berechnungsverfahren zum Bestimmen der Positionen, Größen und/oder Drehwinkel.

**12.** System nach einem der Ansprüche 9 bis 11, wobei die gemeinsame Abbildung üblicherweise für mehrere Benutzer verwendet wird, und wobei gemeinsame Abbildungen, die von unterschiedlichen Benutzertypen angewendet werden, unterschiedlich sind.

**Revendications**

**1.** Procédé de traitement, le procédé comprenant :

la réception (210), par un serveur de clichés et en provenance d'un serveur de services, d'une instruction pour délivrer un paquet de fichiers de ressources permettant de générer un cliché sur un client, dans lequel l'instruction est reçue après réception d'une demande concernant le cliché en provenance d'un utilisateur par l'intermédiaire du client sur le serveur de services, et dans lequel le cliché demandé est destiné à un certain type de service, dans lequel les services dudit certain type de service ont au moins une image commune, et dans lequel le type de service est appliqué pour générer le cliché, et l'instruction comprend le type de service d'un service du paquet de fichiers de ressources et une adresse du client pour l'envoi ;

la génération, sur le serveur de clichés, d'une image commune en utilisant un premier ensemble de contenus originaux, dans lequel l'image commune correspond au type de service, et dans lequel les contenus originaux sont destinés à générer une image dédiée du cliché demandé ;

la mise en paquet, sur le serveur de clichés, de l'image commune correspondant au type de service, des contenus originaux destinés à générer l'image dédiée appliquée au type de service et d'un fichier de configuration dans le paquet de fichiers de ressources ;

l'envoi (220), par le serveur de clichés au client, du paquet de fichiers de ressources pour que le client génère le cliché en utilisant les contenus originaux reçus et l'image commune conformément au fichier de configuration, et pour que le client présente le cliché à l'utilisateur ;

la réception, par le client et en provenance du serveur de services, d'informations textuelles correspondant à l'utilisateur et générées par le serveur de services conformément à la demande du client, dans lequel les informations textuelles indiquent des contenus originaux à utiliser pour générer l'image dédiée du cliché pour l'utilisateur, dans lequel les informations textuelles sont utilisées par le client pour générer l'image dédiée en utilisant les contenus originaux correspondant aux informations textuelles et l'image commune correspondant aux informations textuelles conformément au fichier de configuration, et dans lequel les informations textuelles comprennent des informations de quantité et de mot de passe ;

la recherche, par le client, d'un second ensemble de contenus originaux parmi les contenus originaux reçus pour générer l'image dédiée du cliché, dans lequel il est déterminé que chacun du second ensemble de contenus originaux correspond à chaque caractère, nombre ou symbole dans le fichier de configuration conformément aux informations textuelles reçues en provenance du serveur de services, dans lequel le client trace le second ensemble de contenus originaux conformément à des positions et à des tailles désignées dans le fichier de configuration sur l'image commune ; et

la génération, par le client, du cliché demandé en utilisant les informations textuelles, les contenus originaux reçus et l'image commune pour générer le cliché conformément au fichier de configuration.

**2.** Procédé selon la revendication 1, le procédé comprenant en outre :

la génération, conformément à la demande et sur le serveur de services, des informations textuelles correspondant à l'utilisateur, dans lequel les informations textuelles comprennent des informations de quantité et de mot de passe ; et

l'envoi des informations textuelles, par le serveur de services au client.

**3.** Procédé selon la revendication 1, comprenant en outre :

avant réception de la demande concernant le cliché en provenance de l'utilisateur par l'intermédiaire du client, l'utilisation de certains des contenus originaux du cliché pour générer à l'avance l'image commune ; ou

après réception de la demande concernant le cliché en provenance de l'utilisateur par l'intermédiaire du client, l'utilisation de certains des contenus originaux du cliché pour générer l'image commune conformément à la demande.

**4.** Procédé selon l'une quelconque des revendications 1 à 3, dans lequel le fichier de configuration comprend : des positions, des tailles et/ou des angles de rotation permettant de tracer les contenus originaux pour générer l'image dédiée sur l'image commune, ou un procédé de calcul permettant de déterminer les positions, les tailles et/ou les angles de rotation.

**5.** Procédé selon l'une quelconque des revendications 1 à 4, dans lequel l'image commune est utilisée en commun pour une pluralité d'utilisateurs.

**6.** Procédé selon l'une quelconque des revendications 1 à 5, dans lequel l'image dédiée correspond à l'utilisateur, et l'image dédiée est affichée en arrière-plan sur l'image commune.

**7.** Procédé selon l'une quelconque des revendications 1 à 6, dans lequel l'instruction comprend un type de service du paquet de fichiers de ressources et une adresse du client pour l'envoi.

**8.** Appareil de synthèse de clichés, l'appareil étant mis en œuvre en utilisant un logiciel et un matériel, ou une combinaison de logiciel et de matériel, dans lequel l'appareil est configuré pour effectuer les étapes selon l'un quelconque des procédés 1 à 7.

**9.** Système mis en œuvre par ordinateur, dans lequel le système comprend :

un dispositif client configuré pour :

recevoir une demande concernant une image pour un certain type de service, dans lequel la demande est une demande lancée par l'utilisateur et envoyée par l'intermédiaire du dispositif client à un serveur de services, dans lequel des services dudit certain type de service ont au moins une image commune en tant qu'élément caractéristique commun correspondant audit certain type de service, et
après réception d'informations textuelles en provenance d'un serveur de services et d'un paquet de fichiers de ressources en provenance d'un serveur de clichés, générer un cliché complet à présenter à l'utilisateur, dans lequel le paquet de fichiers de ressources comprend une image commune correspondant au type de service, des contenus originaux destinés à générer une image dédiée du cliché, et un fichier de configuration, et dans lequel le cliché est généré conformément au fichier de configuration en utilisant les informations textuelles, les contenus originaux reçus et l'image commune ;

le serveur de services étant configuré pour :

recevoir la demande du dispositif client,
envoyer une instruction pour délivrer le paquet de fichiers de ressources au serveur d'images, dans lequel l'instruction comprend le type de service du service du paquet de fichiers de ressources et une adresse du client pour l'envoi,
générer, conformément à la demande du dispositif client, les informations textuelles correspondant à l'utilisateur, dans lequel les informations textuelles comprennent une quantité et un mot de passe à inclure dans le cliché généré sur le dispositif client pour l'utilisateur, et dans lequel les informations textuelles sont utilisées par le client pour générer l'image dédiée en utilisant les contenus originaux correspondant aux informations textuelles et l'image commune correspondant aux informations textuelles conformément au fichier de configuration, et
envoyer les informations textuelles générées au dispositif client ; et

le serveur de clichés étant configuré pour :

recevoir l'instruction envoyée par le serveur de services,
générer une image commune en utilisant un premier ensemble de contenus originaux, dans lequel l'image commune correspond au type de service, et dans lequel les contenus originaux sont destinés à générer une image dédiée du cliché demandé,
mettre en paquet l'image commune correspondant au type de service, les contenus originaux destinés à générer l'image dédiée appliquée au type de service et le fichier de configuration dans le paquet de fichiers de ressources, et
délivrer le paquet de fichiers de ressources destiné à générer le cliché sur le dispositif client en utilisant les contenus originaux reçus et l'image commune conformément au fichier de configuration, dans lequel un second ensemble de contenus originaux est déterminé par le client à partir des contenus originaux définis pour générer l'image dédiée du cliché, dans lequel il est déterminé que chacun du second ensemble de contenus originaux correspond à chaque caractère, nombre ou symbole dans le fichier de configuration conformément aux informations textuelles reçues en provenance du serveur de services, dans lequel le client trace le second ensemble de contenus originaux conformément à des positions et à des tailles désignées dans le fichier de configuration sur l'image commune.

**10.** Système selon la revendication 9, dans lequel le serveur de clichés est configuré pour :

avant réception de la demande concernant le cliché en provenance de l'utilisateur par l'intermédiaire du client, utiliser certains des contenus originaux du cliché pour générer à l'avance l'image commune ; ou
après réception de la demande concernant le cliché en provenance de l'utilisateur par l'intermédiaire d'un client, utiliser certains des contenus originaux du cliché pour générer l'image commune conformément à la demande.

**11.** Système selon l'une quelconque des revendications 9 à 10, dans lequel le fichier de configuration comprend : des positions, des tailles et/ou des angles de rotation permettant de tracer les contenus originaux pour générer l'image dédiée sur l'image commune, ou un procédé de calcul permettant de déterminer les positions, les tailles et/ou les angles de rotation.

**12.** Système selon l'une quelconque des revendications 9 à 11, dans lequel l'image commune est utilisée en commun pour une pluralité d'utilisateurs, et dans lequel les images communes appliquées par différents types d'utilisateurs sont différentes.

Enter a password and
snatch a red envelope
Amount of red envelope 1-9 yuan

Enter a password and
snatch a red envelope
Amount of red
envelope 12-62 yuan

Open the home page of Alipay Wallet and
enter a red envelope password

Red envelope
password

8 5 5 9 9

Open the home page of Alipay Wallet and
enter a red envelope password

Red envelope
password

8 0 1 3 4 8

**Fig. 1**

Receiving a request for a picture from a user via a client

210

Delivering a common image of the picture, original materials for generating a dedicated image of the picture and a configuration file to the client, for the client to generate the picture using the received original materials and common image according to the configuration file

220

**Fig. 2**

**Fig. 3**

**Fig. 4**

**Fig. 5**

**Fig. 6**

| Other hardware | — | CPU | — | Non-volatile memory |

Memory

**Fig. 7**

Request receiving unit

Material response unit

Picture synthesis apparatus

**Fig. 8**

**EP 3 279 808 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510145112

- US 20110239108 A

**Non-patent literature cited in the description**

- HTML templates that fly. **MICHIAKI TATSUBORI et al.** 18th International World Wide Web Conference. ACM, 20 April 2009, 951-960